# EUROPEAN PATENT SPECIFICATION

(11) **EP 0 716 938 B1**
(45) Date of publication and mention of the grant of the patent: **09.12.1998**
(21) Application number: 95850211.4
(22) Date of filing: 29.11.1995
(51) Int. Cl.: B60B 19/00, B60B 33/00, A47L 9/00, A47L 9/04

(54) **Wheel for a vacuum cleaner nozzle or for a vacuum cleaner**
Rad für Staubsaugermundstück oder für Staubsauger
Roue pour buse d'aspirateur ou pour aspirateur

(30) Priority: 12.12.1994 SE 9404314
(43) Date of publication of application: 19.06.1996
(73) Proprietor: AKTIEBOLAGET ELECTROLUX, 105 45 Stockholm (SE)
(72) Inventor: Kilström, Lars Gunnar, S-193 30 Täby (SE)
(74) Representative: Erixon, Bo

(56) References cited:
- DE-A- 3 319 413
- DE-A- 3 520 119
- DE-C- 4 105 996
- DE-U- 9 114 990
- PATENT ABSTRACTS OF JAPAN vol. 9 no. 25 (M-355) ,2 February 1985 & JP-A-59 171701 (SANYO DENKI KK) 28 September 1984,
- PATENT ABSTRACTS OF JAPAN vol. 16 no. 198 (C-0939) ,13 May 1992 & JP-A-04 033624 (MATSUSHITA ELECTRIC IND CO) 5 February 1992,

## Description

This invention relates to a wheel for vacuum cleaner nozzle or for a vacuum cleaner.

Vacuum cleaner nozzles are sometimes provided with wheels in order to improve certain features and the wheels are usually being made of hard plastics. A disadvantage with such wheels is that they can easily scratch the floor . In order to eliminate this drawback it has been suggested to provide the wheels with a rubber tread and this is for instance described in DE 3520119. However such an arrangement instead means that the nozzle is difficult to move sideways.

JP-A-59171701 and JP-A-4033624 describe wheels for vacuum cleaners having a central part made from hard plastic material whereas the wheel is provided with a tread made from soft polyvinyl chloride.

The purpose of this invention is to create a wheel which does not have the disadvantage mentioned above i.e. a wheel which allows the nozzle to be moved in any direction on the floor without any significant resistance and which does not scratch the floor. This is achieved by means of a device having the caracteristics mentioned in the claims. The wheel according to the invention can also anvantageously be used to support the vacuum cleaner.

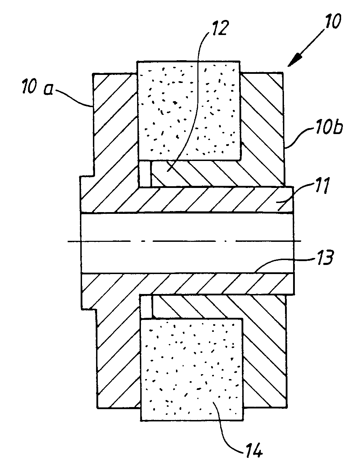

An embodiment of the invention will now be described with reference to the accompanying drawing which shows a vertical section through a wheel according to the invention.

As appears from the Figure the wheel comprises a central part 10 of comparatively hard material for instance hard plastics. The part 10 is one part or as is shown in the Figure several combined parts 10a, 10b. The part 10a has a hub portion 11 extending sideways on which a hub portion 12 of the part 10b and which is shaped in a corresponding way is positioned. The hub portion 11 has a through cylindric bore 13 through which a shaft, not shown, can be inserted and secured to the nozzle can be inserted. Between the two parts 10a and 10b there is an annular tread 14 made from soft material and having a small friction coefficient for instance a felted cloth. The inner periphery of the tread is resting on the hub portion 12 and is clamped between the portions 10a, 10b. The lastmentioned parts are fixed with respect to each other in any suitable way for instance by glueing or by means of screw joints. The expression soft material in this case means a material comprising natural and/or synthetic fibres which are bonded together by means of felting, weaving or by means of bonding agents.

## Claims

1. Wheel (10) for a vacuum cleaner nozzle or for a vacuum cleaner, comprising a central part (10a,10b) of comparatively hard material the central part supporting a tread (14) of soft material **characterized in** that the tread (14) is made of a material comprising natural and/or synthetic fibres which are bonded together by means of felting, weaving or by means of bonding agents.

2. Wheel according to claim 1, **characterized in** that the central part comprises two parts (10a,10b) which are connected to one another and between which the tread (14) is clamped.

## Patentansprüche

1. Rad (10) für ein Staubsaugerdüsenstück oder für einen Staubsauger, umfassend einen Hauptteil (10a, 10b) aus vergleichsweise hartem Material, wobei der Hauptteil ein Laufelement (14) aus weichem Material trägt,
**dadurch gekennzeichnet, daß** das Laufelement (14) aus einem Material gefertigt ist, welches Natur- und/oder Kunstfasern enthält, die durch Verfilzen, Weben oder durch Bindemittel miteinander verbunden sind.

2. Rad nach Anspruch 1,
**dadurch gekennzeichnet, daß** der Hauptteil zwei miteinander verbundene Teile (10a, 10b) umfaßt, zwischen denen das Laufelement (14) festgeklemmt ist.

## Revendications

1. Roue (10) pour une buse d'aspirateur ou pour un aspirateur, comprenant une partie centrale (10a, 10b) en matériau comparativement dur, la partie centrale supportant une bande de roulement (14) en matériau souple, caractérisée en ce que la bande de roulement (14) est réalisée en un matériau comprenant des fibres naturelles et/ou synthétiques qui sont liées ensemble au moyen de feutrage, tissage, ou au moyen d'agents de liaison.

2. Roue selon la revendication 1, caractérisée en ce que la partie centrale comprend deux parties (10a, 10b) qui sont reliées entre elles et entre lesquelles est serrée la bande de roulement (14).
